# EUROPEAN PATENT APPLICATION

(11) **EP 3 339 136 A1**
(43) Date of publication of application: **27.06.2018**
(21) Application number: 16839114.2
(22) Date of filing: 12.08.2016
(51) Int. Cl.: B62D 6/00, B60R 16/027, B62D 1/06, B62D 113/00, B62D 137/00

(54) **OPERATING DEVICE FOR VEHICLES**

(30) Priority: 21.08.2015 JP 2015164081
(71) Applicant: Kabushiki Kaisha Tokai-Rika-Denki-Seisakusho, Niwa-gun, Aichi 480-0195 (JP)
(72) Inventor: YAMAGUCHI, Akihiro, Niwa-gun Aichi 480-0195 (JP)
(74) Representative: Betten & Resch
(86) International application number: PCT/JP2016/073724
(87) International publication number: WO 2017/033767

(57) **Abstract**

This operating device 10 for vehicles comprises: a plurality of detection electrodes Di, serving as positional detection units, which are provided to a steering wheel 3 of a vehicle 1 so as to detect the grip positions of the steering wheel 3 gripped by the right and left hands; a steering angle sensor 5, serving as a steering angle detection unit, which detects the steering angle of the steering wheel 3; and a control unit 100 which calculates a steering angle speed ωSAS, a right-hand relative angle speed ωhR, and a left-hand relative angular speed ωhL on the basis of the detection signals of the detection electrodes Di and the steering angle sensor 5, and determines the operating state of the steering wheel 3 for each stage using a combination of the steering angle speed ωSAS, the right-hand relative angle speed ωhR, and the left-hand relative angular speed ωhL. The steering angle speed ωSAS is the amount of change in the steering angle. The right-hand relative angle speed ωhR is the amount of change in the right-hand grip position between the grip position of the right hand and the steering wheel 3. The left-hand relative angular speed ωhL is the amount of change in the left-hand grip position between the grip position of the left hand and the steering wheel 3.

## Description

### Background

### Technical Field

The present invention relates to an operating device for vehicle.

### Related Art

An operating device for vehicle has been proposed, which includes sensors arranged at regular intervals over the entire circumference of a steering wheel of a vehicle and is configured to detect a state of a steering operation while the vehicle is traveling to prevent a driver from performing an unintentional erroneous operation on a vehicle-mounted device (JP 2014-61761A, for example).

This operating device for vehicle is provided on the surface of the steering wheel of the vehicle. The operating device includes: an operating unit configured to operate various devices mounted on the vehicle; sensors arranged on a circumferential portion of the steering wheel of the vehicle at regular intervals; a detector configured to detect whether a driver is gripping the steering wheel with both his/her hands; and a controller configured to enable inputs into the operating unit when the detector detects that the driver is gripping the steering wheel with both his/her hands. The sensors arranged on the outer circumference of the steering wheel are divided into two groups, namely, right and left groups, and when the controller receives one or more signals from the sensors in each of the groups, the controller determines that the driver is gripping the steering wheel with both his/her hands. According to such an operating device for vehicle, even when the driver unconsciously touches operating means as a result of the steering operation while the vehicle is traveling, such an erroneous operation can be prevented.

### Summary of Invention

The operating device for vehicle according to JP 2014-61761A is capable of detecting whether a steering wheel unit is gripped, but is not capable of detecting an operation state in which a driver causes his/her hand to slide over the surface of a wheel portion. This results in a problem in that an intention of the driver with respect to the operation cannot be accurately ascertained.

An object of the invention is to provide an operating device for vehicle capable of ascertaining an intention of a driver with respect to a steering operation.

[1] An operating device for vehicle according to an embodiment of the invention includes: a plurality of position detectors provided on a steering wheel of a vehicle and configured to detect grip positions of a right hand and a left hand on the steering wheel; a steering angle detector configured to detect a steering angle of the steering wheel; and a controller configured to calculate, on the basis of detection signals from each of the position detector and the steering angle detector, an amount of change in the steering angle, an amount of change in a right-hand grip position, which is a relative positional change of the grip position of the right hand with respect to the steering wheel, and an amount of change in a left-hand grip position, which is a relative positional change of the grip position of the left hand with respect to the steering wheel, and to determine an operation state of the steering wheel in stages on the basis of a combination of the amount of change in the steering angle, the amount of change in the right-hand grip position, and the amount of change in the left-hand grip position.
[2] In the operating device for vehicle defined by [1], the controller may determine that the operation state of the steering wheel is a normal operation when at least either the amount of change in the right-hand grip position or the amount of change in the left-hand grip position is zero.
[3] In the operating device for vehicle defined by [1], the controller may determine that the operation state of the steering wheel includes an abnormal operation when the amount of change in the right-hand grip position or the amount of change in the left-hand grip position is not zero.
[4] In the operating device for vehicle defined by [3], the controller may determine that the operation state is a normal operation when an absolute value of the amount of change in the steering angle is equal to or greater than an absolute value of each of the amount of change in the right-hand grip position and the amount of change in the left-hand grip position.
[5] In the operating device for vehicle defined by [3], the controller may determine that the operation state is an abnormal operation when an absolute value of the amount of change in the steering angle is smaller than an absolute value of either the amount of change in the right-hand grip position or the amount of change in the left-hand grip position.

According to an embodiment of the invention, an operating device for vehicle can be provided that is capable of ascertaining an intention of a driver with respect to a steering operation.

### Brief Description of Drawings

FIG. 1 is a schematic diagram illustrating a configuration of an operating device for vehicle according to an embodiment of the invention.
FIG. 2A is a front view illustrating details of a wheel portion of the operating device for vehicle.
FIG. 2B is a front view illustrating a steering operation state when the vehicle is turning left.
FIG. 2C is a front view illustrating a steering operation state when the vehicle is turning right.
FIG. 3 is a determination table showing steering operation state in stages, when the vehicle is turning left, on the basis of combinations of a right-hand relative velocity and a left-hand relative velocity of a right hand and a left hand.
FIG. 4 is a determination table showing the steering operation state in stages, when the vehicle is turning right, on the basis of combinations of the right-hand relative velocity and the left-hand relative velocity of the right hand and the left hand.
FIG. 5 is a flowchart illustrating an operation flow of the operating device for vehicle according to the embodiment of the invention, when the vehicle is turning left.
FIG. 6 is an operation flow of the operating device for vehicle according to the embodiment of the invention, when the vehicle is turning right, and is a flowchart illustrating a subsequent section (A) of the flowchart illustrated in FIG. 5.

### Description of Embodiments

### Embodiments of invention

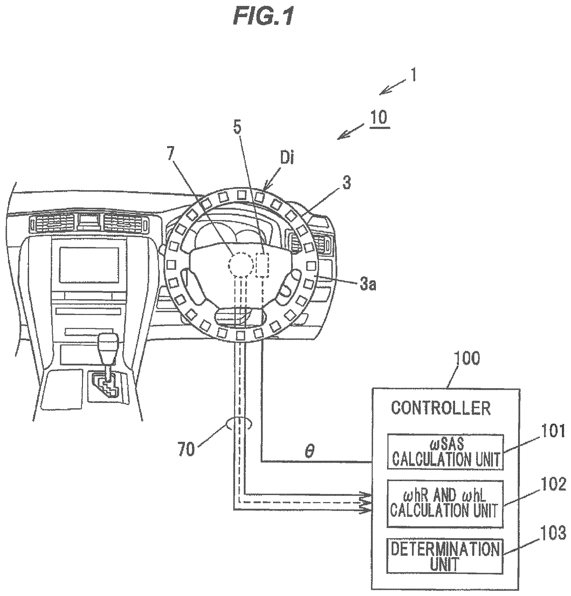

FIG. 1 is a schematic diagram illustrating a configuration of an operating device for vehicle according to an embodiment of the invention.

The operating device for vehicle according to the embodiments of the invention is configured to infer an intention of a driver with respect to a steering operation, on the basis of an amount of change in a steering angle, and a relative relationship between an amount of change in a grip position of a right hand gripping a steering wheel 3 (hereinafter, "steering" sometimes means "steering wheel") and an amount of change in a grip position of a left hand gripping the steering wheel 3.

In the present embodiment, a steering angular velocity ωSAS is used as the amount of change in the steering angle.

Further, when the driver performs the steering operation while gripping the steering wheel 3, a gripping state of each of the right hand and the left hand gripping the steering wheel 3 (a state in which the right hand and/or the left hand is in a fixed position on the steering wheel 3, or a state in which the right hand and/or the left hand is caused to slide on the steering wheel 3) is detected as a right-hand relative angular velocity and a left-hand relative angular velocity. A right-hand relative angular velocity ωhR is used as the amount of change in the right-hand grip position, which indicates a relative positional change in the grip position of the right hand with respect to the steering wheel 3. Similarly, a left-hand relative angular velocity ωhL is used as the amount of change in the left-hand grip position, which indicates a relative positional change in the grip position of the left hand with respect to the steering wheel 3.

Note that the right-hand relative angular velocity and the left-hand relative angular velocity may correspond to a right-hand relative velocity and a left-hand relative velocity, respectively.

### Configuration of operating device for vehicle 10

A plurality of operating devices for vehicle 10 according to the present embodiment are provided on the steering wheel 3 of a vehicle 1. Each of the operating devices for the vehicle 10 includes: a detection electrode Di functioning as a position detector that detects the grip positions of the right hand and the left hand on the steering wheel 3; a steering angle sensor (SAS) 5 functioning as a steering angle detector that detects a steering angle of the steering wheel 3; and a controller 100. The controller 100 calculates, on the basis of detection signals from both the detection electrode Di and the steering angle sensor 5, the steering angular velocity ωSAS that is the amount of change in the steering angle, the right-hand relative angular velocity ωhR that is the amount of change in the right-hand grip position, which indicates the relative positional change of the grip position of the right hand with respect to the steering wheel 3, and the left-hand relative angular velocity ωhL that is the amount of change in the left-hand grip position, which indicates the relative positional change of the grip position of the left hand with respect to the steering wheel 3. The controller 100 further determines an operation state of the steering wheel 3 in stages, on the basis of a combination of the steering angular velocity ωSAS, the right-hand relative angular velocity ωhR, and the left-hand relative angular velocity ωhL.

### Configuration of detection electrode Di

As illustrated in FIG. 1, a plurality of the detection electrodes Di are arranged along the circumferential direction of a wheel portion 3a of the steering wheel 3. In the present embodiment, the number of the electrodes is set to 24, and the electrodes are arranged over the entire circumference of the wheel portion 3a. Note that hereinafter, the detection electrodes Di are referred to as the detection electrodes Di (i = 1, 2, 3,···, 24). The number of electrodes is not limited to 24, and any number of electrodes can be used as long as the plurality of electrodes are arranged along the circumferential direction of the wheel portion 3a and the electrodes are capable of detecting the grip positions of the right hand and the left hand.

The detection electrodes Di (i = 1, 2, 3,···, 24) are arranged at regular intervals along the circumferential direction of the wheel portion 3a of the steering wheel 3. The electrostatic capacitance value of each detection electrode Di changes depending on whether an approach or contact of the right hand or the left hand occurs. In the present embodiment, an electrostatic capacitance detection system of a self-capacitance type is employed, which detects the grip position on the basis of an amount of change in the electrostatic capacitance value which increases with the approach or the contact of the right hand or the left hand. Note that the detection of the grip position does not solely rely on the above-described system, and various other detection systems can be used, such as an electrostatic capacitance detection system of a mutual-capacitance type and a pressure sensor.

The detection electrodes Di (i = 1, 2, 3,···, 24) mounted on the steering wheel 3 are connected to the controller 100 via a steering roll connector (SRC) 7 illustrated in FIG. 1. The use of the controller 100 allows respective electrostatic capacitance values Ci (i = 1, 2, 3,···, 24) of the detection electrodes Di to be detected via bundled signal wires 70 extending from the steering roll connector (SRC) 7.

### Steering angle sensor 5

The steering angle sensor 5, which is also referred to as a turning steering angle sensor, is attached to a steering shaft of the vehicle 1, and serves as a sensor that sends, to the controller 100, signals that correspond to a steering direction, a neutral position, and a turning steering angle. The steering angle sensor 5 includes a light-emitting diode (LED), a phototransistor (which receives light and converts the light into an electric signal), and a slit plate (which rotates in synchronization with the steering wheel), for example. The rotating slit plate causes the phototransistor to receive light and shields the phototransistor from light, making the phototransistor on and off. The steering angle sensor 5 is connected to the controller 100 via a vehicle LAN or the like, which allows a steering angle θSAS to be detected.

### Controller 100

The controller 100 is, for example, a microcomputer including a central processing unit (CPU) that carries out computations, processing, and the like on acquired data in accordance with a program, a random access memory (RAM) and a read only memory (ROM) that are semiconductor memories, and the like. The RAM is used as a storage region that temporarily stores computation results and the like, for example.

The controller 100 mainly includes a steering angular velocity ωSAS calculation unit 101, a right-hand relative angular velocity ωhR and left-hand relative angular velocity ωhL calculation unit 102, a determination unit 103, and the like.

The steering angular velocity coSAS calculation unit 101 calculates the steering angular velocity ωSAS from the steering angle θSAS input into the controller 100. Specifically, the steering angular velocity ωSAS can be calculated by obtaining an amount of change (a difference) between the steering angles θSAS input at predetermined intervals.

The right-hand relative angular velocity cohR and left-hand relative angular velocity ωhL calculation unit 102 calculates the grip position of the right hand and the grip position of the left hand from the respective electrostatic capacitance values Ci (i = 1, 2, 3,···, 24) of the detection electrodes Di. This configuration enables detection electrodes Di indicating the maximum electrostatic capacitance values Ci to serve as a right-hand grip position θhR and a left-hand grip position θhL. The right-hand relative angular velocity ωhR and the left-hand relative angular velocity ωhL can be calculated by obtaining a relative amount of change in each of the right-hand grip position θhR and the left-hand grip position θhL with respect to the steering wheel 3. On the basis of a relative relationship with the steering angular velocity ωSAS, each of the right-hand relative angular velocity ωhR and the left-hand relative angular velocity ωhL is a value indicating a sliding state of a steering wheel grip. Note that, a distinction between the right-hand grip position and the left-hand grip position can be determined with reference to a vehicle coordinate system, on the assumption that the driver is performing the steering operation without causing his/her hands to cross each other.

The determination unit 103 determines the operation state of the steering wheel 3 in stages, on the basis of calculation results from the steering angular velocity ωSAS calculation unit 101 and the right-hand relative angular velocity ωhR and left-hand relative angular velocity ωhL calculation unit 102.

### Operation of operating device for vehicle 10

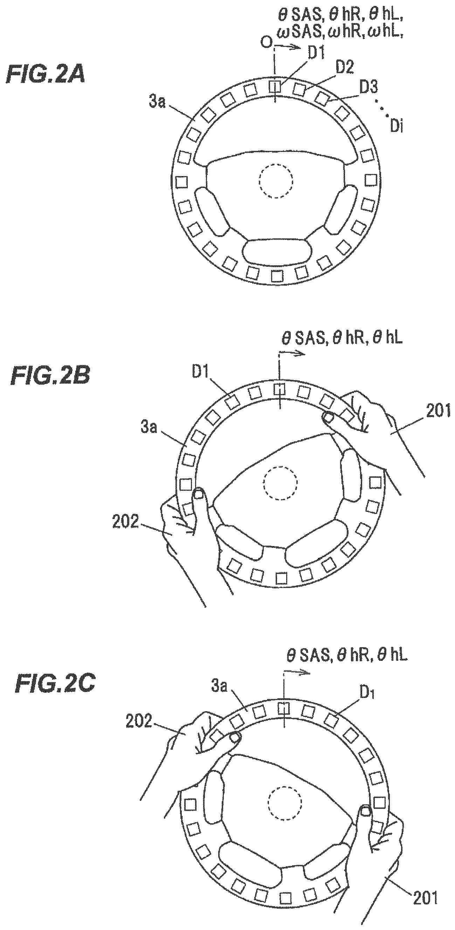

FIG. 2A is a front view illustrating details of the wheel portion of the operating device for vehicle, FIG. 2B is a front view illustrating the steering operation state when the vehicle is turning left, and FIG. 2C is a front view illustrating the steering operation state when the vehicle is turning right. As illustrated in FIG. 2A, the clockwise direction is a positive direction of the steering angle θSAS, the steering angular velocity ωSAS, the right-hand grip position θhR, the left-hand grip position θhL, the right-hand relative angular velocity ωhR, and the left-hand relative angular velocity ωhL. Further, the upper direction in FIG. 2A is a point of origin O of the steering angle θSAS, the right-hand grip position θhR, and the left-hand grip position θhL.

### Operation when vehicle 1 is turning left

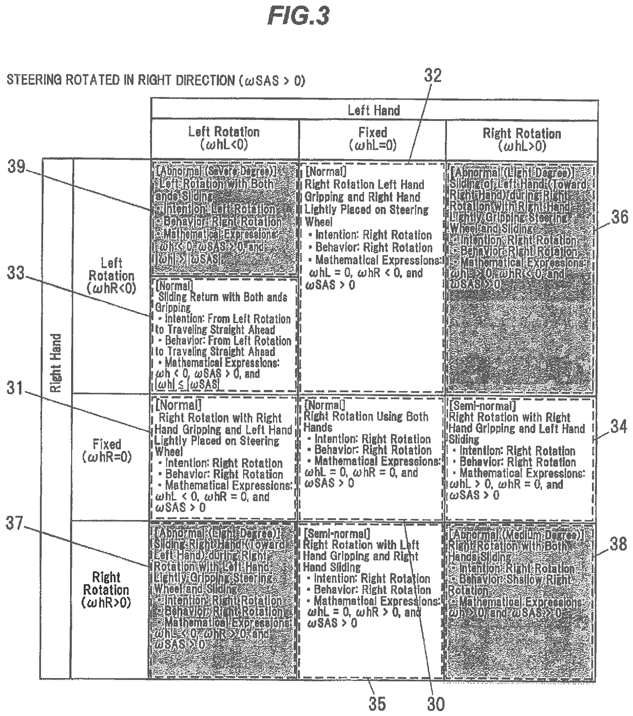

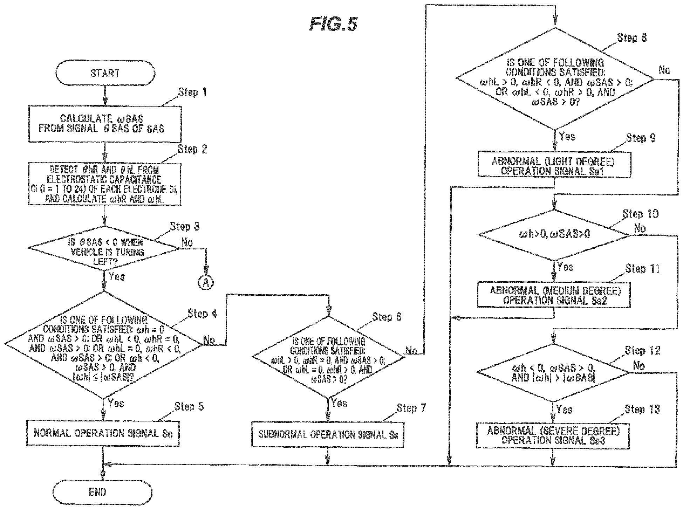

FIG. 3 is a determination table showing the steering operation states in stages, on the basis of combinations of a right-hand relative velocity of a right hand 201 and a left-hand relative velocity of a left hand 202, when the vehicle is turning left. Further, FIG. 3 is a determination table applicable to a state in which the vehicle 1 is turning left (θSAS < 0), and the steering wheel 3 is rotated in the right direction (ωSAS > 0). Further, FIG. 5 is a flowchart illustrating an operation flow of the operating device for vehicle according to the embodiment of the invention when the vehicle 1 is turning left.

An operation during a driving state in which the steering wheel 3 illustrated in FIG. 2A is rotated in the left direction so as to cause the vehicle 1 to turn left while the wheel portion 3a is gripped by the right hand 201 and the left hand 202, as illustrated in FIG. 2B, will be described below.

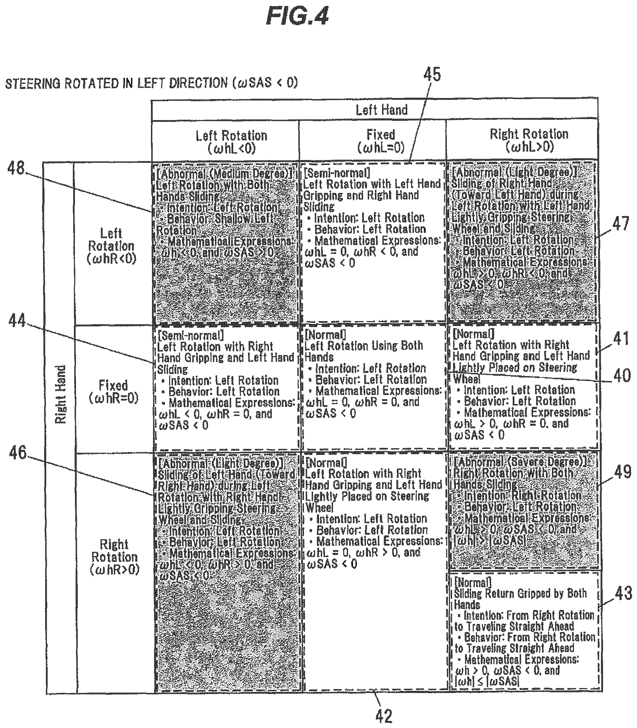

While the vehicle 1 is turning left, as illustrated in FIG. 2B, the determination unit 103 of the controller 100 determines the operation state of the steering wheel 3 in stages, using an algorithm based on the determination table shown in FIG. 3. The description will be made below, following the steps in the flowchart illustrated in FIG. 5. Note that Step 1 to Step 13 in the flowchart illustrated in FIG. 5 will be described as an operation performed during the left turn of the vehicle 1, and an algorithm based on a determination table shown in FIG. 4, which is applicable during the right turn of the vehicle 1, will be described later.

As illustrated in FIG. 5, when the operation flow of the operating device for vehicle 10 starts, first, the steering angular velocity ωSAS calculation unit 101 acquires the steering angle θSAS from the steering angle sensor (SAS) 5, and calculates the steering angular velocity ωSAS from the steering angle θSAS (Step 1).

Further, the right-hand relative angular velocity ωhR and left-hand relative angular velocity ωhL calculation unit 102 acquires the respective electrostatic capacitance values Ci (i = 1, 2, 3,···, 24) of the detection electrodes Di, calculates the right-hand grip position θhR and the left-hand grip position θhL, and calculates the right-hand relative angular velocity ωhR and the left-hand relative angular velocity ωhL from the right-hand grip position θhR and the left-hand grip position θhL (Step 2).

Note that the above-described Step 1 and Step 2 may be performed in a reverse order.

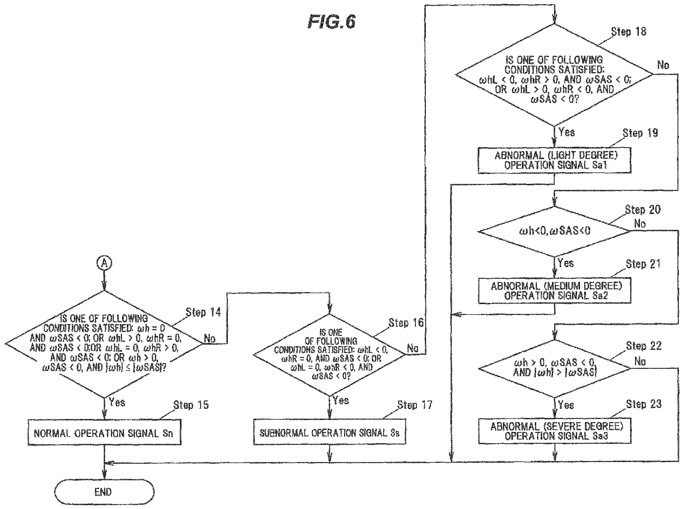

The determination unit 103 determines whether the vehicle 1 is turning left. More specifically, the determination unit 103 determines whether the steering angle θSAS is negative (θSAS < 0) (Step 3). When the steering angle θSAS is negative (θSAS < 0), the operation proceeds to Step 4, and when the steering angle θSAS is not negative (θSAS < 0), the operation proceeds to Step 14 illustrated in FIG. 6.

The determination unit 103 determines whether one of the following conditions is satisfied: (4-1) ωh = 0 (the left-hand relative angular velocity ωhL = 0 and the right-hand relative angular velocity ωhR = 0) and ωSAS > 0; (4-2) the left-hand relative angular velocity ωhL < 0, the right-hand relative angular velocity ωhR = 0, and the steering angular velocity ωSAS > 0; (4-3) the left-hand relative angular velocity ωhL = 0, the right-hand relative angular velocity ωhR < 0, and the steering angular velocity ωSAS > 0; or (4-4) ωh < 0, the steering angular velocity ωSAS > 0, and |ωh| ≤ |ωSAS| (Step 4). When one of the above-described conditions is satisfied, the operation proceeds to Step 5, and when none of the conditions is satisfied, the operation proceeds to Step 6.

Note that ωh = 0 and ωh < 0 are conditions that are satisfied for both the left-hand relative angular velocity ωhL and the right-hand relative angular velocity ωhR, and |ωh| ≤ |ωSAS| is a condition that is satisfied for both |ωhL| and the |ωhR| (the same will apply hereinafter).

The condition (4-1) is indicated by a right-hand and left-hand combination cell 30 in FIG. 3 and is defined by the driver's intention, the vehicle behavior, and mathematical expressions. The combination of the right hand and the left hand described in the cell 30 in FIG. 3 corresponds to the right turn using both hands. More specifically, this is a state in which the steering wheel is rotated in the right direction (ωSAS > 0) while the vehicle 1 is turning left. Since ωhL = 0 and cohR = 0 are satisfied, this is a state in which the steering wheel is rotated in the right direction, namely returning in a direction to a neutral position (a position of the steering wheel when the vehicle is traveling straight ahead), using both hands while the right hand and the left hand grip the steering wheel 3 without sliding. Here, the driver's intention is to turn right, and the vehicle behavior is also the right turn. Thus, the operation state of the steering wheel 3 is determined to be normal. As a result, the determination unit 103 can output a normal operation signal Sn (Step 5).

Further, the condition (4-2) is indicated by a right-hand and left-hand combination cell 31 in FIG. 3 and is defined by the driver's intention, the vehicle behavior, and mathematical expressions. The combination of the right hand and the left hand described in the cell 31 in FIG. 3 corresponds to the right turn performed by gripping with the right hand while the left hand is lightly placed on the steering wheel 3. More specifically, this is a state in which the steering wheel is rotated in the right direction (ωSAS > 0) while the vehicle 1 is turning left. Since ωhL < 0 and ωhR = 0 are satisfied, this is a state in which the left hand is caused to slide while being lightly placed on the steering wheel while the right hand grips the steering wheel. Here, the driver's intention is to turn right, and the vehicle behavior is also the right turn. Thus, the operation state of the steering wheel 3 is determined to be normal. As a result, the determination unit 103 can output the normal operation signal Sn (Step 5).

The condition (4-3) is indicated by a right-hand and left-hand combination cell 32 in FIG. 3 and is defined by the driver's intention, the vehicle behavior, and mathematical expressions. The combination of the right hand and the left hand described in the cell 32 in FIG. 3 corresponds to the right turn performed by gripping with the left hand while the right hand is lightly placed on the steering wheel 3. More specifically, this is a state in which the steering wheel is rotated in the right direction (ωSAS > 0) while the vehicle 1 is turning left. Since ωhL = 0 and ωhR < 0 are satisfied, this is a state in which the right hand is caused to slide while being lightly placed on the steering wheel while the left hand grips the steering wheel. Here, the driver's intention is to turn right, and the vehicle behavior is also the right turn. Thus, the operation state of the steering wheel 3 is determined to be normal. As a result, the determination unit 103 can output the normal operation signal Sn (Step 5).

The condition (4-4) is indicated by a right-hand and left-hand combination cell 33 in FIG. 3 and is defined by the driver's intention, the vehicle behavior, and mathematical expressions. The combination of the right hand and the left hand described in the cell 33 in FIG. 3 corresponds to a sliding return using both hands. More specifically, this is a state in which the steering wheel is rotated in the right direction (ωSAS > 0) while the vehicle 1 is turning left. Since ωhL < 0 and ωhR < 0 are satisfied, this is a state in which both the hands are caused to slide while being lightly placed on the steering wheel so as to return the steering wheel to the neutral position. Further, since |ωh| ≤ |ωSAS| is satisfied, both the hands are caused to slide while gripping the steering wheel to some extent. Here, the driver's intention is to switch from the left turn to traveling straight ahead, and the vehicle behavior is also the switch from the left turn to the traveling straight ahead. Thus, the operation state of the steering wheel 3 is determined to be normal. As a result, the determination unit 103 can output the normal operation signal Sn (Step 5).

Next, the determination unit 103 determines whether one of the following conditions is satisfied: (6-1) the left-hand relative angular velocity ωhL > 0, the right-hand relative angular velocity ωhR = 0, and the steering angular velocity ωSAS > 0; or (6-2) the left-hand relative angular velocity ωhL = 0, the right-hand relative angular velocity cohR > 0, and the steering angular velocity ωSAS > 0 (Step 6). When one of the above-described conditions is satisfied, the operation proceeds to Step 7, and when none of the conditions is satisfied, the operation proceeds to Step 8.

The condition (6-1) is indicated by a right-hand and left-hand combination cell 34 in FIG. 3 and is defined by the driver's intention, the vehicle behavior, and mathematical expressions. The combination of the right hand and the left hand described in the cell 34 in FIG. 3 corresponds to the right turn performed by gripping with the right hand while the left hand is caused to slide on the steering wheel 3. More specifically, this is a state in which the steering wheel is rotated in the right direction (ωSAS > 0) while the vehicle 1 is turning left. Since ωhL > 0 and ωhR = 0 are satisfied, this is a state in which the steering wheel is rotated in the right direction, while the right hand grips the steering wheel and the left hand is caused to slide on the steering wheel 3. Although the steering wheel is caused to slide in the direction of returning to the neutral position while the left hand is caused to slide on the steering wheel, the steering wheel is gripped by the right hand in this state. Here, the driver's intention is to turn right, and the vehicle behavior is also the right turn. Thus, the operation state of the steering wheel 3 is determined to be semi-normal. As a result, the determination unit 103 can output a semi-normal operation signal Ss (Step 7).

The condition (6-2) is indicated by a right-hand and left-hand combination cell 35 in FIG. 3 and is defined by the driver's intention, the vehicle behavior, and mathematical expressions. The combination of the right hand and the left hand described in the cell 35 in FIG. 3 corresponds to the right turn performed by gripping with the left hand while the right hand is caused to slide on the steering wheel 3. More specifically, this is a state in which the steering wheel is rotated in the right direction (ωSAS > 0) while the vehicle 1 is turning left. Since ωhL = 0 and cohR > 0 are satisfied, this is a state in which the steering wheel is rotated in the right direction while the left hand grips the steering wheel and the right hand is caused to slide on the steering wheel 3. Although the steering wheel is caused to slide in the direction of returning to the neutral position while the right hand is caused to slide on the steering wheel, the steering wheel is gripped by the left hand in this state. Here, the driver's intention is to turn right, and the vehicle behavior is also the right turn. Thus, the operation state of the steering wheel 3 is determined to be semi-normal. As a result, the determination unit 103 can output the semi-normal operation signal Ss (Step 7).

Next, the determination unit 103 determines whether one of the following conditions is satisfied: (8-1) the left-hand relative angular velocity ωhL > 0, the right-hand relative angular velocity ωhR < 0, and the steering angular velocity ωSAS > 0; or (8-2) the left-hand relative angular velocity ωhL < 0, the right-hand relative angular velocity ωhR > 0, and the steering angular velocity ωSAS > 0 (Step 8). When one of the above-described conditions is satisfied, the operation proceeds to Step 9, and when none of the conditions is satisfied, the operation proceeds to Step 10.

The condition (8-1) is indicated by a right-hand and left-hand combination cell 36 in FIG. 3 and is defined by the driver's intention, the vehicle behavior, and mathematical expressions. The combination of the right hand and the left hand described in the cell 36 in FIG. 3 corresponds to sliding the left hand (toward the right hand) during the right turn, while the right hand holds the steering wheel a little more firmly and is caused to slide. More specifically, this is a state in which the steering wheel is rotated in the right direction (ωSAS > 0) while the vehicle 1 is turning left. Since ωhL > 0 and ωhR < 0 are satisfied, this is a state in which the steering wheel is caused to slide in the direction of returning to the neutral position while the left hand is lightly placed on the steering wheel, and at the same time, the right hand is caused to slide while being lightly placed on the steering wheel. Since ωhL > 0 is satisfied, the left hand is sliding in the same direction as the steering wheel at a speed faster than the rotation of the steering wheel. Here, the driver's intention is to turn right, and the vehicle behavior is also the right turn. Thus, the operation state of the steering wheel 3 is determined to be abnormal (light degree). As a result, the determination unit 103 can output an abnormal (light degree) operation signal Sa1 (Step 9).

The condition (8-2) is indicated by a right-hand and left-hand combination cell 37 in FIG. 3 and is defined by the driver's intention, the vehicle behavior, and mathematical expressions. The combination of the right hand and the left hand described in the cell 37 in FIG. 3 corresponds to sliding the right hand (toward the left hand) during the right turn, while the left hand holds the steering wheel a little more firmly and is caused to slide. More specifically, this is a state in which the steering wheel is rotated in the right direction (ωSAS > 0) while the vehicle 1 is turning left. Since ωhL < 0 and ωhR > 0 are satisfied, this is a state in which the steering wheel is caused to slide in the direction of returning to the neutral position while the right hand is lightly placed on the steering wheel, and at the same time, the left hand is caused to slide while being lightly placed on the steering wheel. Since ωhR > 0 is satisfied, the right hand is sliding in the same direction as the steering wheel at a speed faster than the rotation of the steering wheel. Here, the driver's intention is to turn right, and the vehicle behavior is also the right turn. Thus, the operation state of the steering wheel 3 is determined to be abnormal (light degree). As a result, the determination unit 103 can output an abnormal (light degree) operation signal Sa1 (Step 9).

Next, the determination unit 103 determines whether the conditions of ωh > 0 and ωSAS > 0 are satisfied (Step 10). When the above-described conditions are satisfied, the operation proceeds to Step 11, and when they are not satisfied, the operation proceeds to Step 12.

The above-described conditions are indicated by a right-hand and left-hand combination cell 38 in FIG. 3 and are defined by the driver's intention, the vehicle behavior, and mathematical expressions. The combination of the right hand and the left hand described in the cell 38 in FIG. 3 corresponds to the right turn while both the hands are sliding. More specifically, this is a state in which the steering wheel is rotated in the right direction (ωSAS > 0) while the vehicle 1 is turning left. Since coh > 0 is satisfied, it can be presumed that this is a state in which both the hands are sliding with respect to the steering wheel, and the driver's intention is to turn the vehicle right, although both the hands are sliding at a speed equal to or faster than the returning speed of the steering wheel. Here, the driver's intention is to turn right, and the vehicle behavior is a shallow right turn. Thus, the operation state of the steering 3 is determined to be abnormal (medium degree). As a result, the determination unit 103 can output an abnormal (medium degree) operation signal Sa2 (Step 11).

Next, the determination unit 103 determines whether the conditions of |ωh| > |ωSAS|, coh < 0, and ωSAS > 0 are satisfied (Step 12). When the above-described conditions are satisfied, the operation proceeds to Step 13, and when none of the conditions is satisfied, the operation is terminated (ends).

The above-described conditions are indicated by a right-hand and left-hand combination cell 39 in FIG. 3 and are defined by the driver's intention, the vehicle behavior, and mathematical expressions. The combination of the right hand and the left hand described in the cell 39 in FIG. 3 corresponds to the left turn while both the hands are sliding. More specifically, this is a state in which the steering wheel is rotated in the right direction (ωSAS > 0) while the vehicle 1 is turning left. Since |ωh| > |ωSAS| is satisfied, this is a state in which both the hands are sliding with respect to the steering wheel at a speed equal to or faster than the returning speed of the steering wheel. Further, since ωh < 0 is satisfied, it can be presumed that the driver's intention is to turn the vehicle left. This indicates that even though the steering wheel has already returned in the direction of the neutral position while the vehicle is turning left, the driver is still performing the steering operation with the intention to turn the vehicle left. Here, the driver's intention is to turn left, but the vehicle behavior is the right turn. Thus, the operation state of the steering wheel 3 is determined to be abnormal (severe degree). As a result, the determination unit 103 can output an abnormal (severe degree) operation signal Sa3 (Step 13).

With the above-described series of steps, a determination flow performed when the vehicle 1 is turning left is terminated.

### Summary of determination in stages shown in FIG. 3

The states described in the right-hand and left-hand combination cells 30, 31, 32, 34, and 35 in FIG. 3 are cases in which at least either the left-hand relative angular velocity ωhL or the right-hand relative angular velocity ωhR is zero, and it can be determined that the operation state of the steering wheel 3 is a normal operation. However, it can be further determined in stages that the cases described in the right-hand and left-hand combination cells 30, 31, and 32 are normal operations, and the cases described in the combination cells 34 and 35 are semi-normal operations.

Further, those states described in the right-hand and left-hand combination cells 36, 37, 38, and 39 are cases in which neither the left-hand relative angular velocity ωhL nor the right-hand relative angular velocity ωhR is zero, and it can be determined that the operation state of the steering wheel 3 is an abnormal operation. However, it can be further determined in stages that the cases described in the right-hand and left-hand combination cells 36 and 37 are abnormal (light degree) operations, the case described in the combination cell 38 is an abnormal (medium degree) operation, and the case described in the combination cell 39 is an abnormal (severe degree) operation.

Further, although the state described in the right-hand and left-hand combination cell 33 in FIG. 3 is the case in which neither the left-hand relative angular velocity cohL nor the right-hand relative angular velocity cohR is zero, when an absolute value of the steering angular velocity ωSAS is equal to or greater than an absolute value of each of the right-hand relative angular velocity ωhR and the left-hand relative angular velocity ωhL, the operation state can be determined to be a normal operation.

### Operation when vehicle 1 is turning right

FIG. 4 is a determination table showing the steering operation state in stages, on the basis of combinations of the right-hand relative velocity of the right hand 201 and the left-hand relative velocity of the left hand 202, when the vehicle is turning right. FIG. 4 is a determination table applicable to a state in which the vehicle 1 is turning right (θSAS > 0) and the steering wheel 3 is rotated in the left direction (ωSAS < 0). Further, FIG. 6 is an operation flow of the operating device for vehicle according to the embodiment of the invention when the vehicle is turning right, and is a flowchart illustrating a subsequent part (A) of the flowchart illustrated in FIG. 5. The subsequent part (A) of the flowchart illustrated in FIG. 5, namely, Step 14 and the subsequent steps will be described below.

The determination unit 103 determines whether one of the following conditions is satisfied: (14-1) ωh = 0 (the left-hand relative angular velocity ωhL = 0 and the right-hand relative angular velocity ωhR = 0) and ωSAS > 0; (14-2) the left-hand relative angular velocity ωhL > 0, the right-hand relative angular velocity ωhR = 0, and the steering angular velocity ωSAS < 0; (14-3) the left-hand relative angular velocity ωhL = 0, the right-hand relative angular velocity ωhR > 0, and the steering angular velocity ωSAS < 0; or (14-4) ωh < 0, the steering angular velocity ωSAS < 0, and |ωh| ≤ |ωSAS| (Step 14). When one of the above-described conditions is satisfied, the operation proceeds to Step 15, and when none of the conditions is satisfied, the operation proceeds to Step 16.

Note that ωh = 0 and ωh > 0 mean that those conditions are satisfied for both the left-hand relative angular velocity ωhL and the right-hand relative angular velocity ωhR, and |ωh| ≤ |ωSAS| means that this condition is satisfied for both |ωhL| and |ωhR| (the same will apply hereinafter).

The condition (14-1) is indicated by a right-hand and left-hand combination cell 40 in FIG. 4 and is defined by the driver's intention, the vehicle behavior, and mathematical expressions. The combination of the right hand and the left hand described in the cell 40 in FIG. 4 corresponds to the left turn using both hands. More specifically, this is a state in which the steering wheel is rotated in the left direction (ωSAS < 0) while the vehicle 1 is turning right. Since ωhL = 0 and ωhR = 0 are satisfied, this is a state in which the steering wheel is rotated in the left direction, namely returning in a direction to the neutral position (the position of the steering wheel when the vehicle is traveling straight ahead), using both hands while the right hand and the left hand grip the steering wheel without sliding. Here, the driver's intention is to turn left, and the vehicle behavior is also the left turn. Thus, the operation state of the steering wheel 3 is determined to be normal. As a result, the determination unit 103 can output the normal operation signal Sn (Step 15).

The condition (14-2) is indicated by a right-hand and left-hand combination cell 41 in FIG. 4 and is defined by the driver's intention, the vehicle behavior, and mathematical expressions. The combination of the right hand and the left hand described in the cell 41 in FIG. 4 corresponds to the left turn performed by gripping with the right hand while the left hand is lightly placed on the steering wheel 3. More specifically, this is a state in which the steering wheel is rotated in the left direction (ωSAS < 0) while the vehicle 1 is turning right. Since ωhL < 0 and ωhR = 0 are satisfied, this is a state in which the left hand is caused to slide while being lightly placed on the steering wheel while the right hand grips the steering wheel. Here, the driver's intention is to turn left, and the vehicle behavior is also the left turn. Thus, the operation state of the steering wheel 3 is determined to be normal. As a result, the determination unit 103 can output the normal operation signal Sn (Step 15).

The condition (14-3) is indicated by a right-hand and left-hand combination cell 42 in FIG. 4 and is defined by the driver's intention, the vehicle behavior, and mathematical expressions. The combination of the right hand and the left hand described in the cell 42 in FIG. 4 corresponds to the left turn performed by gripping with the left hand while the right hand is lightly placed on the steering wheel 3. More specifically, this is a state in which the steering wheel is rotated in the left direction (ωSAS < 0) while the vehicle 1 is turning right. Since ωhL = 0 and ωhR > 0 are satisfied, this is a state in which the right hand is caused to slide while being lightly placed on the steering wheel while the left hand grips the steering wheel. Here, the driver's intention is to turn left, and the vehicle behavior is also the left turn. Thus, the operation state of the steering wheel 3 is determined to be normal. As a result, the determination unit 103 can output the normal operation signal Sn (Step 15).

The condition (14-4) is indicated by a right-hand and left-hand combination cell 43 in FIG. 4 and is defined by the driver's intention, the vehicle behavior, and mathematical expressions. The combination of the right hand and the left hand described in the cell 43 in FIG. 4 corresponds to a sliding return using both the hands. More specifically, this is a state in which the steering wheel is rotated in the left direction (ωSAS < 0) while the vehicle 1 is turning right. Since ωhL > 0 and ωhR > 0 are satisfied, this is a state in which both the hands are caused to slide while being lightly placed on the steering wheel so as to return the steering wheel to the neutral position. Further, since |ωh| ≤ |ωSAS| is satisfied, both the hands are caused to slide while gripping the steering wheel to some extent. Here, the driver's intention is to turn right, and the vehicle behavior is also the right turn. Thus, the operation state of the steering wheel 3 is determined to be normal. As a result, the determination unit 103 can output the normal operation signal Sn (Step 15).

Next, the determination unit 103 determines whether one of the following conditions is satisfied: (16-1) the left-hand relative angular velocity ωhL < 0 and the right-hand relative angular velocity ωhR = 0, and the steering angular velocity ωSAS < 0; or (16-2) the left-hand relative angular velocity ωhL = 0, the right-hand relative angular velocity ωhR < 0, and the steering angular velocity ωSAS < 0 (Step 16). When one of the above-described conditions is satisfied, the operation proceeds to Step 17, and when none of the conditions is satisfied, the operation proceeds to Step 18.

The condition (16-1) is indicated by a right-hand and left-hand combination cell 44 in FIG. 4 and is defined by the driver's intention, the vehicle behavior, and mathematical expressions. The combination of the right hand and the left hand described in the cell 44 in FIG. 4 corresponds to left turn performed by gripping with the right hand while the left hand is caused to slide on the steering wheel 3. More specifically, this is a state in which the steering wheel is rotated in the left direction (ωSAS < 0) while the vehicle 1 is turning right. Since ωhL < 0 and ωhR = 0 are satisfied, this is a state in which the steering wheel is rotated in the right direction while the right hand grips the steering wheel and the left hand is caused to slide on the steering wheel 3. Although the steering wheel is caused to slide in the direction of returning to the neutral position while the left hand is caused to slide on the steering wheel, the steering wheel is gripped by the right hand in this state. Here, the driver's intention is to turn left, and the vehicle behavior is also the left turn. Thus, the operation state of the steering wheel 3 is determined to be semi-normal. As a result, the determination unit 103 can output the semi-normal operation signal Ss (Step 17).

The condition (16-2) is indicated by a right-hand and left-hand combination cell 45 in FIG. 4 and is defined by the driver's intention, the vehicle behavior, and mathematical expressions. The combination of the right hand and the left hand described in the cell 45 in FIG. 4 corresponds to the left turn performed by gripping with the left hand while the right hand is caused to slide on the steering wheel 3. More specifically, this is a state in which the steering wheel is rotated in the left direction (ωSAS < 0) while the vehicle 1 is turning right. Since ωhL = 0 and ωhR < 0 are satisfied, this is a state in which the steering wheel is rotated in the left direction while the left hand grips the steering wheel and the right hand is caused to slide on the steering wheel 3. Although the steering wheel is caused to slide in the direction of returning to the neutral position while the right hand is caused to slide on the steering wheel 3, the steering wheel is gripped by the left hand in this state. Here, the driver's intention is to turn left and the vehicle behavior is also the left turn. Thus, the operation state of the steering wheel 3 is determined to be semi-normal. As a result, the determination unit 103 can output the semi-normal operation signal Ss (Step 17).

Next, the determination unit 103 determines whether one of the following conditions is satisfied: (18-1) the left-hand relative angular velocity ωhL < 0, the right-hand relative angular velocity ωhR > 0, and the steering angular velocity ωSAS < 0; or (18-2) the left-hand relative angular velocity ωhL > 0, the right-hand relative angular velocity ωhR < 0, and the steering angular velocity ωSAS < 0 (Step 18). When one of the above-described conditions is satisfied, the operation proceeds to Step 19, and when none of the conditions is satisfied, the operation proceeds to Step 20.

The condition (18-1) is indicated by a right-hand and left-hand combination cell 46 in FIG. 4 and is defined by the driver's intention, the vehicle behavior, and mathematical expressions. The combination of the right hand and the left hand described in the cell 46 in FIG. 4 corresponds to sliding the left hand (toward the right hand) during the right turn, while the right hand holds the steering wheel a little more firmly and is caused to slide. More specifically, this is a state in which the steering wheel is rotated in the left direction (ωSAS < 0) while the vehicle 1 is turning right. Since ωhL > 0 and ωhR < 0 are satisfied, this is a state in which the steering wheel is caused to slide in the direction of returning to the neutral position while the left hand is lightly placed on the steering wheel, and at the same time, the right hand is caused to slide while being lightly placed on the steering wheel. Since ωhR < 0 is satisfied, the right hand is sliding in the same direction as the steering wheel at a speed faster than the rotation of the steering wheel. Here, the driver's intention is to turn left, and the vehicle behavior is also the left turn. Thus, the operation state of the steering wheel 3 is determined to be abnormal (light degree). As a result, the determination unit 103 can output the abnormal (light degree) operation signal Sa1 (Step 19).

The condition (18-2) is indicated by a right-hand and left-hand combination cell 47 in FIG. 4 and is defined by the driver's intention, the vehicle behavior, and mathematical expressions. The combination of the right hand and the left hand described in the cell 47 in FIG. 4 corresponds to sliding the right hand (toward the left hand) during the right turn, while the left hand holds the steering wheel a little more firmly and is caused to slide. More specifically, this is a state in which the steering wheel is rotated in the left direction (ωSAS < 0) while the vehicle 1 is turning right. Since ωhL < 0 and ωhR > 0 are satisfied, this is a state in which the steering wheel is caused to slide in the direction of returning to the neutral position while the right hand is lightly placed on the steering wheel, and at the same time, the left hand is caused to slide while being lightly placed on the steering wheel. Since ωhL < 0 is satisfied, the left hand is sliding in the same direction as the steering wheel at a speed faster than the rotation of the steering wheel. Here, the driver's intention is to turn left, and the vehicle behavior is also the left turn. Thus, the operation state of the steering wheel 3 is determined to be abnormal (light degree). As a result, the determination unit 103 can output the abnormal (light degree) operation signal Sa1 (Step 19).

Next, the determination unit 103 determines whether the conditions of ωh < 0 and ωSAS < 0 are satisfied (Step 20). When the above-described conditions are satisfied, the operation proceeds to Step 21, and when the conditions are not satisfied, the operation proceeds to Step 22.

The above-described conditions are indicated by a right-hand and left-hand combination cell 48 in FIG. 4 and are defined by the driver's intention, the vehicle behavior, and mathematical expressions. The combination of the right hand and the left hand described in the cell 48 in FIG. 4 corresponds to the left turn while both the hands are sliding. More specifically, this is a state in which the steering wheel is rotated in the left direction (ωSAS < 0) while the vehicle 1 is turning right. Since ωh < 0 is satisfied, it can be presumed that this is a state in which both the hands are sliding with respect to the steering wheel, and the driver's intention is to turn the vehicle left, although both the hands are sliding at a speed equal to or faster than the returning speed of the steering wheel. Here, the driver's intention is to turn left, and the vehicle behavior is a shallow left turn. Thus, the operation state of the steering wheel 3 is determined to be abnormal (medium degree). As a result, the determination unit 103 can output the abnormal (medium degree) operation signal Sa2 (Step 21).

Next, the determination unit 103 determines whether the conditions of |ωh| > |ωSAS|, ωh > 0, and ωSAS < 0 are satisfied (Step 22). When the above-described conditions are satisfied, the operation proceeds to Step 23, and when the conditions are not satisfied, the operation is terminated (ends).

The above-described conditions are indicated by a right-hand and left-hand combination cell 49 in FIG. 4 and are defined by the driver's intention, the vehicle behavior, and mathematical expressions. The combination of the right hand and the left hand described in the cell 49 in FIG. 4 corresponds to the right turn while both the hands are sliding. More specifically, this is a state in which the steering wheel is rotated in the left direction (ωSAS < 0) while the vehicle 1 is turning right. Since |ωh| > |ωSAS| is satisfied, this is a state in which both the hands are sliding with respect to the steering wheel at a speed equal to or faster than the returning speed of the steering wheel. Further, since coh < 0 is satisfied, it can be presumed that the driver's intention is to turn the vehicle right. This indicates that even though the steering wheel has already returned to the direction of the neutral position while the vehicle is turning right, the driver is still performing the steering operation with the intention to turn the vehicle right. Here, the driver's intention is to turn right, but the vehicle behavior is the left turn. Thus, the operation state of the steering wheel 3 is determined to be abnormal (severe degree). As a result, the determination unit 103 can output the abnormal (severe degree) operation signal Sa3 (Step 23).

With the above-described series of steps, a determination flow performed when the vehicle 1 is turning right is completed.

### Summary of determination in stages shown in FIG. 4

The states described in the right-hand and left-hand combination cells 40, 41, 42, 44, and 45 in FIG. 4 are cases in which at least either the left-hand relative angular velocity ωhL or the right-hand relative angular velocity ωhR is zero, and it can be determined that the operation state of the steering wheel 3 is the normal operation. However, it can be further determined in stages that the cases described in the right-hand and left-hand combination cells 40, 41, and 42 are the normal operations, and the cases described in the combination cells 44 and 45 are the semi-normal operations.

Further, the states described in the right-hand and left-hand combination cells 46, 47, 48, and 49 in FIG. 4 are cases in which neither the left-hand relative angular velocity ωhL nor the right-hand relative angular velocity ωhR is zero, and it can be determined that the operation state of the steering wheel 3 is the abnormal operation. However, it can be further determined in stages that the cases described in the right-hand and left-hand combination cells 46 and 47 are the abnormal (light degree) operations, the case described in the combination cell 48 is the abnormal (medium degree) operation, and the case described in the combination cell 49 is the abnormal (severe degree) operation.

Further, although the state described in the right-hand and left-hand combination cell 43 in FIG. 4 is the case in which neither the left-hand relative angular velocity ωhL nor the right-hand relative angular velocity cohR is zero, when the absolute value of the steering angular velocity ωSAS is equal to or greater than the absolute value of each of the right-hand relative angular velocity ωhR and the left-hand relative angular velocity ωhL, the operation state can be determined to be the normal operation.

### Effects of embodiment

According to the embodiments of the invention, the following effects are achieved:
(1) In the present embodiment, the plurality of electrodes Di are arranged over the entire circumference of the wheel portion 3a. Thus, the grip positions of the right hand and the left hand can be detected on the basis of their relative relationships with the steering angular velocity ωSAS. The sliding state of the right hand and the left hand during the steering operation can be detected by calculating the right-hand relative angular velocity ωhR and the left-hand relative angular velocity ωhL on the basis of the grip positions. Then, by making various determinations on the basis of the detection results, the driver's intention with respect to the steering operation can be ascertained.
(2) As illustrated in FIG. 3 and FIG. 4, as a result of making determinations on the basis of the combination of the relative angular velocities of the right hand and the left hand (ωhR, ωhL), the operation state of the driver's steering can be determined in stages. For example, when at least either the left-hand relative angular velocity ωhL or the right-hand relative angular velocity ωhR is zero, the operation state of the steering wheel 3 can be determined to be the normal operation. Further, when neither the left-hand relative angular velocity ωhL nor the right-hand relative angular velocity ωhR is zero, the operation state of the steering wheel 3 can be determined to be the abnormal operation.
(3) Meanwhile, even when neither the left-hand relative angular velocity ωhL nor the right-hand relative angular velocity ωhR is zero, when the absolute value of the steering angular velocity ωSAS is equal to or greater than the absolute value of each of the right-hand relative angular velocity ωhR and the left-hand relative angular velocity ωhL, the operation state can be determined to be the normal operation. More specifically, in the present embodiment, the sliding state with respect to the steering wheel is detected, and the operation state is determined to be the normal operation or the abnormal operation on the basis of the detection result. Therefore, even when neither the left-hand relative angular velocity ωhL nor the right-hand relative angular velocity ωhR is zero, the operation state can be determined to be the normal operation.

Although several embodiments and modifications of the invention have been described above, these embodiments and modifications are merely examples, and the invention according to CLAIMS later is not intended to be limited to the embodiments and modifications. Further, such new embodiments and modifications can be implemented in various other forms, and various omissions, substitutions, changes, and the like can be made without departing from the spirit and scope of the invention. In addition, all combinations of the features described in these embodiments and modifications are not necessary means to solve the problem. Furthermore, these embodiments and modifications are included within the spirit and scope of the invention and also within the scope of the invention described in the CLAIMS and equivalents thereof.

### Reference Signs List

1 VEHICLE
3 STEERING WHEEL
3a WHEEL PORTION
5 STEERING ANGLE SENSOR
10 OPERATING DEVICE FOR VEHICLE
100 CONTROLLER
101 STEERING ANGULAR VELOCITY ωSAS CALCULATION UNIT
102 RIGHT-HAND RELATIVE ANGULAR VELOCITY ωhR and LEFT-HAND RELATIVE ANGULAR VELOCITY ωhL CALCULATION UNIT
103 DETERMINATION UNIT
Di DETECTION ELECTRODE
θSAS STEERING ANGLE
θhR RIGHT-HAND GRIP POSITION
θhL LEFT-HAND GRIP POSITION
ωSAS STEERING ANGULAR VELOCITY
ωhR RIGHT-HAND RELATIVE ANGULAR VELOCITY
ωhL LEFT-HAND RELATIVE ANGULAR VELOCITY

## Claims

1. An operating device for vehicle, comprising:
a plurality of position detectors provided on a steering wheel of a vehicle and configured to detect grip positions of a right hand and a left hand on the steering wheel;
a steering angle detector configured to detect a steering angle of the steering wheel; and
a controller configured to calculate, on the basis of detection signals from each of the position detector and the steering angle detector, an amount of change in the steering angle, an amount of change in a right-hand grip position, which is a relative positional change of the grip position of the right hand with respect to the steering wheel, and an amount of change in a left-hand grip position, which is a relative positional change of the grip position of the left hand with respect to the steering wheel, and to determine an operation state of the steering wheel in stages on the basis of a combination of the amount of change in the steering angle, the amount of change in the right-hand grip position, and the amount of change in the left-hand grip position.

2. The operating device for vehicle according to claim 1, wherein the controller determines that the operation state of the steering wheel is a normal operation when at least either the amount of change in the right-hand grip position or the amount of change in the left-hand grip position is zero.

3. The operating device for vehicle according to claim 1, wherein the controller determines that the operation state of the steering wheel includes an abnormal operation when the amount of change in the right-hand grip position or the amount of change in the left-hand grip position is not zero.

4. The operating device for vehicle according to claim 3, wherein the controller determines that the operation state is a normal operation when an absolute value of the amount of change in the steering angle is equal to or greater than an absolute value of each of the amount of change in the right-hand grip position and the amount of change in the left-hand grip position.

5. The operating device for vehicle according to claim 3, wherein the controller determines that the operation state is an abnormal operation when an absolute value of the amount of change in the steering angle is smaller than an absolute value of either the amount of change in the right-hand grip position or the amount of change in the left-hand grip position.
